# EUROPÄISCHE PATENTANMELDUNG

(11) **EP 1 235 001 A2**
(43) Veröffentlichungstag der Anmeldung: **28.08.2002**
(21) Anmeldenummer: 02000229.1
(22) Anmeldetag: 12.01.2002
(51) Int. Cl.: F16H 1/14

(54) **Drehbarer Stellantrieb**

(30) Priorität: 12.01.2001 ES 200100070
(71) Anmelder: Auxiliar de Componentes Electricos, SA, 50171 La Puebla de Alfinden-Zaragoza (ES)
(72) Erfinder: Alejandre, Miguel Angel Alejandre, Auxiliar de, Adelfa A,6-7 50171 La Puebla de Alfinden (ES)
(74) Vertreter: Schäfer, Matthias, Dipl.-Ing.

(57) **Zusammenfassung**

Drehbarer Stellantrieb von der Art, welche eingesetzt werden, um jegliche Art von Vorrichtung einzustellen, wie zum Beispiel Klimaanlagen und Scheinwerfer der Automobile, dadurch gekennzeichnet, daß innerhalb eines Gehäuses (10) und seinem entsprechenden Deckel (11) ein Elektromotor (1) angeordnet ist, der ein Untersetzungsgetriebe (2) trägt, an dessen Endstück ein kegelförmiger Kranz (5) angeordnet wurde, welcher sich auf einer Stange (4) befindet und der auf seiner hinteren Seite einen oder mehr Positionsanzeiger (7) aufweist, die sich auf ihrer gegenüberliegenden elektronischen Leiterplatte (9) verschieben, was die vorbestimmte Einstellung des gesteuerten Elements bewirkt.

## Beschreibung

Die vorliegende Patentbeschreibung betrifft, wie aus ihrem Titel hervorgeht, einen drehbaren Stellantrieb von der Art, welcher eingesetzt wird, um eine Drehbewegung auf bestimmte Mechanismen zu übertragen, welche eine oder mehrere Einstellungen benötigen, wie beispielsweise Vorrichtungen zur Luftklimatisierung und Scheinwerfereinstellung, vorzugsweise in Fahrzeugen.

Heutzutage sind einige Arten von Antrieben bekannt, welche es im allgemeinen bei unterschiedlichem mechanischem Aufbau möglich machen, daß ihr Elektromotor, der durch die entsprechende Elektronik gesteuert wird, eine Drehbewegung einer Achse bewirkt, welche mit dem Mechanismus, der anzutreiben ist, verbunden ist.

Die drehbaren Stellantriebe, die heutzutage verwendet werden, um verschiedene Mittel, wie beispielsweise Luftklimatisierer und Schweinwerfereinstellvorrichtungen von Fahrzeugen, einzustellen, weisen den Nachteil auf, ein übermäßiges Volumen mit sich zu bringen, was in vielen Fällen ernsthafte Probleme für ihre Implantation in die Fahrzeuge verursachen kann, wobei auch ihre erhöhten Herstellungskosten ein Problem darstellen.

Um diese Raum- und Wirtschaftsprobleme zu lösen, wurde der drehbare Stellantrieb, welcher Gegenstand der vorliegenden Erfindung ist, entworfen, welcher im wesentlichen aus einem Elektromotor besteht, dessen Ausgangsachse einen Satz von Kränzen von der Art von Differentialtellerrädern umfaßt, die in einem Gehäuse angeordnet sind und mit der angemessenen Geschwindigkeit die Drehbewegung eines beweglichen Kranzes bewirken, der an seinem vorderen Ausgang ein Kegelrad aufweist, welches die Stange, die abgewinkelt angeordnet ist, durch den konischen Kranz, den die erwähnte Stange umfaßt, veranlaßt, sich zu drehen.

Die Antriebsstange weist an ihrem Ende eine Geometrie auf, die für jeden Bedarf vorgesehen ist, während an ihrem gegenüberliegenden Ende, das heißt auf der Seite, die der Verzahnung des Kranzes gegenüberliegt, ein oder mehrere Positionsanzeiger angeordnet sind, deren Verschiebung auf den Bahnen einer elektronischen Leiterplatte automatisch die Einstellung der gesteuerten Vorrichtung bestimmt, der vielfache Einstellungen verschafft werden können, je nach der Anzahl von Positionsanzeigern, die eingesetzt werden, und logischerweise der Art der elektronischen Leiterplatte, die den Positionsanzeigern zugeordnet ist.

Die zuvor erwähnten Elemente, welche die Erfindung bilden, sind in einem Gehäuse mit seinem entsprechenden Deckel enthalten, welche eine Gestaltung aufweisen können, die sich je nach Bedarf ändert.

Der drehbare Stellantrieb, der empfohlen wird, weist gegenüber den Mitteln, die heutzutage bekannt sind, den wesentlichen Vorteil seines reduzierten Volumens auf, wobei gleichzeitig auch eine Reduktion der Herstellungskosten erreicht wird.

Ein weiterer Vorteil spiegelt sich in seiner hohen Zuverlässigkeit wider, da die Einfachheit des Mechanismus seinen korrekten Betrieb erleichtert.

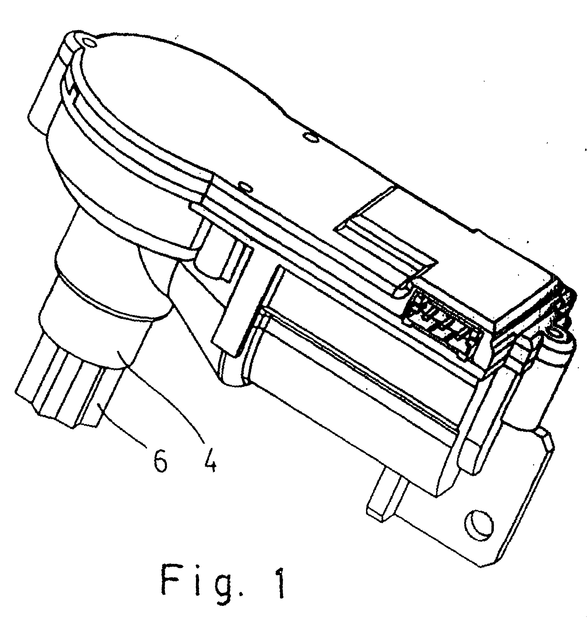

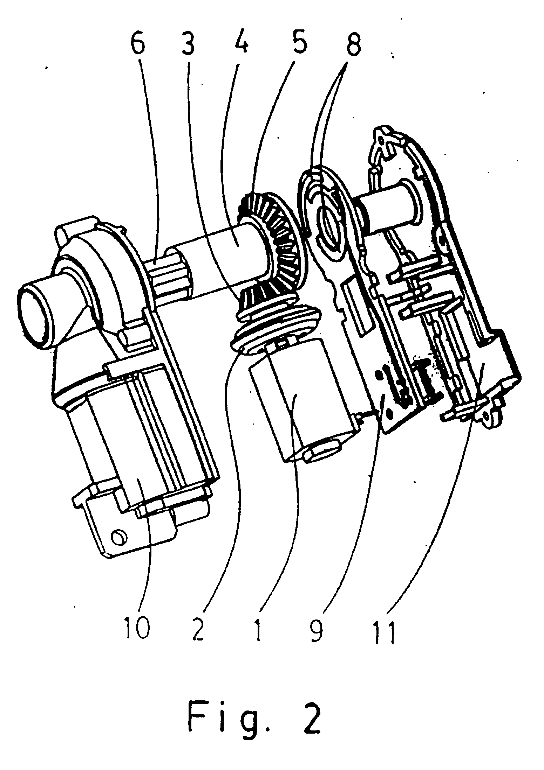

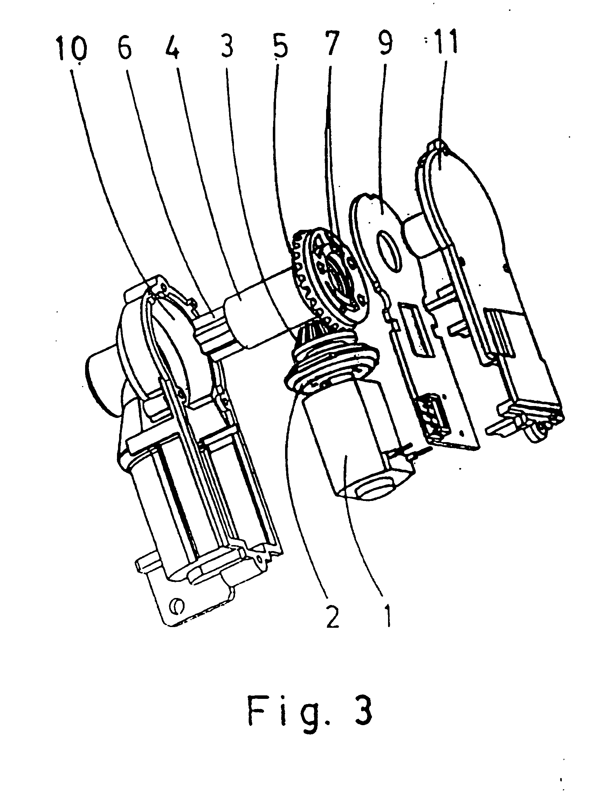

Zum besseren Verständnis der Aufgabe der vorliegenden Erfindung wurde in den beiliegenden Zeichnungen ein bevorzugtes Ausführungsbeispiel desselben dargestellt. In diesen Zeichnungen:
Zeigt Figur 1 eine vergrößerte perspektivische Ansicht des drehbaren Stellantriebs, der angemeldet ist.
Zeigt Figur 2 eine auseinandergezogene perspektivische Ansicht seiner Bauteile, bei der die Kegelräder zu erkennen sind, wobei sie miteinander in Verbindung treten.
Ähnelt Figur 3 der vorhergehenden, wobei sich lediglich die Neigung der Bauteile ändert, um die Positionsanzeiger darstellen zu können, die der Kranz, den die Stange umfaßt, auf seiner hinteren Seite aufweist.

Der drehbare Stellantrieb, der angemeldet ist, beinhaltet, wie in den erwähnten Figuren zu erkennen ist, einen Elektromotor 1, der mit einer Untersetzungsgruppe 2 verbunden ist, die aus einer Gruppe von Kränzen von der Art von Differentialtellerrädern besteht, an deren Endachse der bewegliche Kranz 3 verankert ist, welcher kegelförmig gestaltet und mit der zylindrischen Stange 4 über den Kranz 5 verbunden ist, der ebenfalls kegelförmig und Teil von dieser an einem ihrer Enden ist, während am gegenüberliegenden Ende die Verankerungsmittel 6, die für jeden Bedarf erforderlich sind, ausgeführt sind. Der Elektromotor 1 wird im rechten Winkel zu der zylindrische Stange 4 angeordnet.

Auf der Seite, welche der Verzahnung des Kranzes 5 gegenüberliegt, wurden ein oder mehrere Positionsanzeiger 7 angeordnet, welche dadurch, daß sie sich auf den Bahnen 8, welche die elektronische Leiterplatte 9 trägt, verschieben, die vorbestimmten Einstellungen ermöglichen, welche mit der zweckdienlichen Steuerung eingegeben werden. Die elektronische Leiterplatte 9 ist parallel und gegenüber den Positionsanzeigern 7 angeordnet.

Die vorhin erwähnten Elemente, welche in die angemeldete Erfindung einbezogen werden, sind innerhalb des Gehäuses 10 untergebracht, wobei dieses mittels des Deckels 11 geschlossen wird.

Nach der ausführlichen Beschreibung der Beschaffenheit der vorliegenden Erfindung sowie einer Ausführungsform derselben bleibt uns nur noch, darauf hinzuweisen, daß ihre Beschreibung nicht einschränkend ist und leichte Änderungen vorgenommen werden können, sofern diese die Wesentlichkeit der Charakteristiken, die nachfolgend beansprucht werden, nicht beeinflussen.

## Patentansprüche

1. Drehbarer Stellantrieb von der Art, welche verwendet werden, um jegliche Art von Vorrichtung einzustellen, wie im Fall der Klimaanlagen von Fahrzeugen, der Ausrichtung der Scheinwerfer derselben, sowie in vielfachen Anwendungen, bei welchen wenigstens zwei oder mehrere Einstellungen des gesteuerten Elements notwendig sind, **dadurch gekennzeichnet, daß** der Mechanismus aus einem Elektromotor (1) besteht, an dessen Ausgang ein Untersetzungsgetriebe (2) angeordnet ist, der aus mehreren Kränzen von der Art von Differentialtellerrädern besteht, deren Endstück einen beweglichen Kranz (3) aufweist, welcher eine kegelförmige Verzahnung aufweist, mit dem eine zylindrische Stange (4) durch einen Kranz (5) verbunden ist, der ebenfalls kegelförmig ausgebildet und ein Teil der Stange an einem ihrer Enden ist, während am gegenüberliegenden Ende ein Verankerungsmittel oder -system (6), das für jeden Bedarf geeignet ist, vorgesehen ist.

2. Drehbarer Stellantrieb nach dem vorhergehenden Anspruch, **dadurch gekennzeichnet, daß** der Kranz (5) auf der Seite, die der kegelförmigen Verzahnung gegenüberliegt, einen oder mehr Positionsanzeiger (7) aufweist, welche sich auf Bahnen (8) verschieben, welche eine elektronische Leiterplatte (9), die gegenüber und parallel zum Elektromotor (1) angeordnet ist, aufweist.
